(19) Europäisches Patentamt
European Patent Office
Office européen des brevets

(11) **EP 3 947 779 B1**

(12) **EUROPEAN PATENT SPECIFICATION**

(45) Date of publication and mention
of the grant of the patent:
**07.06.2023 Bulletin 2023/23**

(21) Application number: **20715083.0**

(22) Date of filing: **03.04.2020**

(51) International Patent Classification (IPC):
**C25B 1/042** (2021.01)   **C25B 1/23** (2021.01)
**C25B 15/02** (2021.01)   **C25B 15/027** (2021.01)
**H01M 8/18** (2006.01)

(52) Cooperative Patent Classification (CPC):
**C25B 1/23; C25B 1/042; C25B 15/02;**
**C25B 15/027;** H01M 8/186; Y02E 60/36;
Y02E 60/50; Y02P 20/133

(86) International application number:
**PCT/EP2020/059508**

(87) International publication number:
**WO 2020/201485 (08.10.2020 Gazette 2020/41)**

(54) **ELECTROLYSIS SYSTEM WITH CONTROLLED THERMAL PROFILE**

ELEKTROLYSESYSTEM MIT GESTEUERTEM THERMISCHEN PROFIL

SYSTÈME D'ÉLECTROLYSE AVEC RÉGULATION DE PROFIL THERMIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Validation States:
**MA TN**

(30) Priority: **05.04.2019 EP 19167612**

(43) Date of publication of application:
**09.02.2022 Bulletin 2022/06**

(73) Proprietor: **DynElectro ApS**
**4130 Viby Sjaelland (DK)**

(72) Inventors:
• **JENSEN, Søren Højgaard**
**4621 Gadstrup (DK)**
• **GRAVES, Christopher Ronald**
**Palo Alto**
**California 94306 (US)**
• **MOGENSEN, Mogens Bjerg**
**3540 Lynge (DK)**

(74) Representative: **Grünecker Patent- und**
**Rechtsanwälte**
**PartG mbB**
**Leopoldstraße 4**
**80802 München (DE)**

(56) References cited:
**WO-A1-2018/033948      US-A1- 2009 263 681**

• CHRISTOPHER GRAVES ET AL: "Eliminating
degradation in solid oxide electrochemical cells
by reversible operation", NATURE MATERIALS,
vol. 14, no. 2, 1 February 2015 (2015-02-01), pages
239-244, XP055453216, GB ISSN: 1476-1122, DOI:
10.1038/nmat4165 cited in the application
• Manea Dhafer ET AL: "Experimental Study of
Wave Shape and Frequency of the Power Supply
on the Energy Efficiency of Hydrogen Production
by Water Electrolysis", International Journal of
Innovative Research in Science, Engineering and
Technology, vol. 4, no. 12, 1 December 2015
(2015-12-01), pages 12239-12250, XP055837109,
ISSN: 2347-6710, DOI:
10.15680/IJIRSET.2015.0412105

**Description**

**FIELD OF INVENTION**

This invention relates to a system comprising one or more electrolysis cell(s) and at least one power electronic unit that supplies the cell(s) with a fluctuating voltage, and to a method for operating one or more electrolysis cell(s), comprising one or more voltage fluctuations to the electrolysis cell(s) by at least one power electronic unit, enabling improved thermal management during operation of the electrolysis cell(s).

The invention enables improved control of the temperature distribution in electrolysis cells and stacks by controlling the size and shape of a voltage fluctuation. The invention enables isothermal operation under dynamic load conditions, increases the cell(s) lifetime by reducing thermo-mechanical stress and by desorbing impurities adsorbed at the active sites in the electrodes. Specifically, for $CO_2$ electrolysis the invention increases the maximum obtainable carbon monoxide outlet gas concentration.

**BACKGROUND OF THE INVENTION**

In commercial electrolysis systems, cells are typically stacked with interconnects between the cells. A single repeating unit (SRU) of the stack consists of a cell and an interconnect. Due to their intrinsic capability of converting electrical energy into chemical energy, electrolysis systems are considered as a key technology for a renewable energy economy.

For example, high temperature electrolysis cells (such as, e.g., Solid Oxide Electrolysis Cells (SOECs)) can be used to convert $CO_2$ and $H_2O$ to CO, $H_2$ and $O_2$. SOECs typically operate at 600 to 900 °C. The electrolysis reaction is endothermic and thus requires heat to be supplied to the cells, which may be accomplished by pre-heating the inlet gas (the $CO_2$ and/or $H_2O$). Alternatively, the electrolysis stack can be operated at thermo-neutral potential, which represents the SRU voltage where the Joule heat (i.e. heat generated by current running through the internal resistance in the SRU) matches the heat required by the electrolysis reaction, so that energy input from or output to outside may be minimized and electrolysis efficiency may be improved.

For $H_2O$ steam electrolysis, the thermo-neutral potential ($E_{tn}$) is approximately 1.3 V, and for $CO_2$ electrolysis it is approximately 1.5 V. In high temperature electrolysis cells, $E_{tn}$ is substantially higher than the open circuit voltage (OCV), i.e. the voltage across the terminals of an electrolysis cell and in the absence of external current flow. For typical SOEC operating temperatures and gas compositions at ambient pressure, the OCV is slightly below 1 V. In such electrolysis systems, operation of an SRU at $E_{tn}$ typically causes excessive degradation due to the high electrode overvoltage(s) in the SRU and/or adsorption of impurities at the electrochemically active sites in the electrode. Increasing the SRU voltage above $E_{tn}$ (and thus further increasing the electrolysis current density) will accelerate the degradation, lower the conversion efficiency and increase the need for thermal control to dissipate the excessive Joule heat.

When the SRU voltage and current is changed, the temperature distribution in the stack gradually change due to variation of reaction and Joule heat production. This introduces thermo-mechanical stress, which may lead to loss of contact at the interfaces between the various layers in the stack (typically between stack and bipolar interconnect plates). Therefore, dynamic operation which involves repeated change of the SRU voltage and current can decrease the lifetime. On the other hand, C. Graves et al., Nature Materials 2015, 14, 239-244, discloses that the voltage rapidly increases above 1.3 V in constant-current electrolysis operation at -1 A·cm$^{-2}$, while reversing the current periodically (-1/+0.5 A·cm$^{-2}$) leads to lower degradation, more stable cell voltage and extended lifetime of the cells. However, that beneficial effect was observed in a test of a single cell mounted in an externally-heated near-isothermal enclosure. Dynamic testing of larger stacks result in much larger temperature fluctuations which can induce high degradation rates due to the thermal stresses, overshadowing that beneficial effect ("Solid oxide electrolysis for grid balancing", Final Report for Energinet.dk, project no. 2013-1-12013, Fig. 27. Pp. 35).

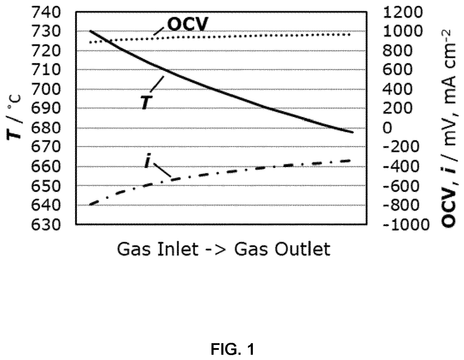

If a high-temperature electrolysis cell stack is operated with an SRU voltage between OCV and $E_{tn}$, the gas inside the stack will cool down from inlet towards outlet. An example of this is shown in FIG. 1 and concerns $CO_2$ electrolysis in a stack with an SRU voltage of 1.228 Volt (a typical SOEC SRU voltage). The temperature from gas inlet to gas outlet significantly drops although an excessive amount of oxygen sweeps the positive electrode to limit the temperature decrease inside the stack. With decreasing temperature, the internal resistance increases, which in turn decreases the absolute current density at stack outlet and causes an uneven current distribution in the stack.

For high temperature $CO_2$ electrolysis the decreased outlet temperature decreases the threshold for the onset of carbon deposition. This decreases the maximum carbon monoxide content in the outlet gas that can be obtained without risking detrimental carbon formation in the electrodes, which translates into increased expenses for gas separation. Operating at an SRU voltage of $E_{tn}$ for $CO_2$ electrolysis would remove the temperature drop from inlet to outlet. Unfortunately, operation at $E_{tn}$ with state-of-the-art cells typically results in high degradation rates.

A local temperature decrease in the stack also causes tensile stress at the interconnect/cell interface, which may potentially lead to delamination and loss of contact which again increases the internal resistance in the cell. The decreased uniformity in the current density and conversion of the reactant gas further accelerates degradation. For smaller stacks, the thermo-mechanical stress can be limited by using a sweep-gas (e.g. over-blow of air). However, this adds complexity and cost to the system, in particular if the system is operated at elevated pressure.

Dynamic operation of electrolysis cells is generally of particular interest, as this provides load-following capabilities, i.e. services that can be sold to electricity grid operators. Besides this, an increased lifetime and improved impurity tolerance which may decrease operational costs are desirable.

Different methods have been proposed in prior art to provide load-following capabilities to SOEC systems.

One method involves operation at a constant current with a SRU voltage between OCV and $E_{tn}$. When the SRU voltage is below $E_{tn}$, the stack cools until the internal resistance in the SRU is high enough to raise the SRU voltage to $E_{tn}$. In this way, the stack will be operated at a lower power (due to the lower current) compared to the previous set-point where the current was higher. When a higher power is required, the current is increased. This will increase the SRU voltage above $E_{tn}$, which again increases the stack temperature until the internal resistance is low enough to ensure operation at $E_{tn}$. However, this method is disadvantageous since the thermal profile in the stack changes when the SRU voltage is changed, which causes thermo-mechanical stress inside the SRU and compromises the weak IC/cell interfaces. Furthermore, the response time is several minutes to hours before stable operation at the new set-point is achieved.

A further known method is to operate a multi-stack system in cascade-mode, wherein the stacks are operated either at OCV or thermo-neutral potential. The number of stacks operated at thermo-neutral voltage divided with the total number of stacks defines the load ratio. This operating strategy requires individual power and gas supplies to several stacks which remarkably increases system complexity and costs.

US 2009/0325014 A1 discloses a method, wherein the concentration of reactant gases fed into the cell is altered in response to fluctuations of the current supplied to the cell, thereby altering the current required to reach thermo-neutral potential.

WO 2018/033948 A1 discloses a method of controlling the operation of an electrolytic cell stack for hydrogen production by a temperature control mechanism, which has the purpose of regulating the voltage (in constant voltage mode) or the current (in constant current mode) to a lower target value when a preset upper temperature threshold value has been exceeded and to the initial target value when a preset lower temperature threshold value has been underrun, and thereby enables near-thermoneutral operation. US 2009/263681 A1 likewise discloses a system comprising a means of monitoring the temperature of an electrolyzer stack, and cycling input voltage around a thermal neutral voltage. However, these methods essentially require a temperature monitoring system and a control system which ensures that voltage (or current) is cycled between two threshold values.

A. Dhafer, International Journal of Innovative Research in Science, Engineering and Technology 2015, 4(12), 12239-12250 discloses a study on the influences of wave shape and frequency of the power supply on the energy efficiency of water electrolysis. However, no dynamic or thermoneutral operation of electrochemical cell stacks is mentioned. Finally, US 2016/0040310 A1 describes a hydrogen production system that includes a capacitor inputting electric power energy from a renewable power supply, and storing electric power, a pulse voltage generation unit generating a pulse voltage having a set amplitude and a set cyclic period by using the electric power stored in the capacitor, and an electrolytic cell applying the generated pulse voltage, and generating hydrogen by high temperature steam electrolysis by using steam supplied into the electrolytic cell.

However, the proposed methods do not satisfactorily solve the problem of providing a low-cost electrolysis system which simultaneously enables fast-response dynamic operation, improved electrolysis efficiency, increased lifetime and high impurity tolerance.

In view of the above, there still exists a need to provide an electrolysis system and a method of its operation which addresses the above-identified problems.

## SUMMARY OF THE INVENTION

The present invention solves these objects with the subject matter of the claims as defined herein. Further advantages of the present invention will be further explained in detail in the section below.

In general, the present invention relates to a system for operating one or more electrolysis cell(s), comprising: one or more electrolysis cell(s) and at least one power electronic unit, wherein the power electronic unit(s) is(are) configured to provide one or more voltage fluctuations to the electrolysis cell(s), wherein the voltage fluctuation(s) are configured such that near-thermoneutral operation at part load is enabled by matching the integral Joule heat production with the integral reaction heat consumption inside said cell(s), the near-thermoneutral operation denoting an electrothermal balanced operation, which uses electric (Joule) heat to balance the required reaction heat; and wherein the voltage fluctuations are periodical changes of cell voltage with a frequency in the range of from 10 mHz to 100 kHz.

In a further embodiment, the present invention provides a method for operating one or more electrolysis cell(s), comprising: providing one or more voltage fluctuations to the electrolysis cell(s) by at least one power electronic unit, wherein the voltage fluctuation(s) are configured such that near-thermoneutral operation at part load is enabled by matching the integral Joule heat production with the integral reaction heat consumption inside said cell(s), the near-thermoneutral operation denoting an electrothermal balanced operation, which uses electric (Joule) heat to balance the required reaction heat; and wherein the voltage fluctuations are periodical changes of cell voltage with a frequency in the range of from 10 mHz to 100 kHz.

The present invention enables dynamic operation of electrolysis systems, increased lifetime, impurity tolerance, and carbon activity in the outlet gas.

Preferred embodiments of the system for operating one or more electrolysis cell(s) and the related method, as well as other aspects of the present invention are described in the following description and the claims.

## BRIEF DESCRIPTION OF THE DRAWINGS

FIG. 1 shows the simulated OCV, temperature and current density, for conventional $CO_2$ electrolysis operating profile with 5x oxygen overblow (i.e. with a cell footprint of 100 cm$^2$, 5% CO at gas inlet and 28% CO at gas outlet, $CO_2$ as buffer gas, a SRU voltage of 1.228 V, and a total current of 50 A).

FIG. 2A schematically illustrates an electrolysis cell.

FIG. 2B illustrates an electrolysis system comprising two cells stacked in series.

FIG. 3A and 3B show examples of a steam electrolysis using voltages with sine wave-shaped fluctuations. Corresponding average voltages are shown as horizontal lines.

FIG. 4 shows an example of a steam electrolysis using fluctuating voltage operation at $E_{tn}$ 80% of the time and at OCV 20% of the time (thick line). The average voltage is shown as the thin line. $E_{tn}$ and OCV are shown with dotted lines.

FIG. 5 shows an example of a $CO_2$ electrolysis using square wave-shaped fluctuating voltage (thick line) with average cell voltages of 1.18 V and 1.32 V (thin line), respectively. $E_{tn}$ and OCV are shown with dotted lines.

FIG. 6 is a diagram showing OCV, temperature and current density for the square wave-shaped fluctuating voltage with average cell voltages of 1.114 V. The temperature profile is shown for 5x oxygen overblow (a cell footprint of 100 cm$^2$, 5% CO at gas inlet and 28% CO at gas outlet, $CO_2$ as buffer gas, a cell voltage of 1.3 V for 74% of the time and 0.7 V for 26% of the time, and the total current being 53 A).

FIG. 7 is a diagram showing the OCV, temperature and current density under the conditions of FIG. 6, except for the omission of oxygen overblow.

FIG. 8 is a diagram showing the OCV, temperature and current density calculated for Example 3.

FIG. 9 shows the cell area specific resistance, current and voltage as function of time during AC/DC $H_2O$ electrolysis.

FIG. 10 shows the comparison of the area specific resistances for DC and AC/DC test in $H_2O$ electrolysis.

FIG. 11 depicts the OCV, temperature and current density profiles calculated for Example 4.

FIG. 12 shows the comparison of the area specific resistances for DC and AC/DC test in $CO_2$ electrolysis and gas cleaning effects.

## DETAILED DESCRIPTION OF THE INVENTION

For a more complete understanding of the present invention, reference is now made to the following description of the illustrative embodiments thereof:

In a first embodiment, the present invention relates to a system for operating one or more electrolysis cell(s), comprising: one or more electrolysis cell(s); and at least one power electronic unit, wherein the power electronic unit(s) provide(s) one or more voltage fluctuations to the electrolysis cell(s), wherein the voltage fluctuation(s) are configured such that near-thermoneutral operation at part load is enabled by matching the integral Joule heat production with the integral reaction heat consumption inside said cell(s), the near-thermoneutral operation denoting an electrothermal balanced operation, which uses electric (Joule) heat to balance the required reaction heat; and wherein the voltage fluctuations are periodical changes of cell voltage with a frequency in the range of from 10 mHz to 100 kHz.

In practice, actual electrolysis systems typically operate at conditions that are neither fully isothermal nor fully adiabatic. The term "near-thermoneutral operation" generally denotes electrolysis operation where the absolute value of the difference between the integrated Joule heat production and the integrated reaction heat consumption (both integrated over a period of more than 3600 seconds) is less than the absolute value of the integrated heat consumption or the absolute value of the integrated heat production, or both. In the present invention, "near-thermoneutral operation" is understood as electrothermal balanced operation, which uses electric (Joule) heat to balance the required reaction heat and can be distinguished from conventional thermal balanced operation where the thermal capacity of excess air flow is used limit temperature variations in electrolysis cells and stacks.

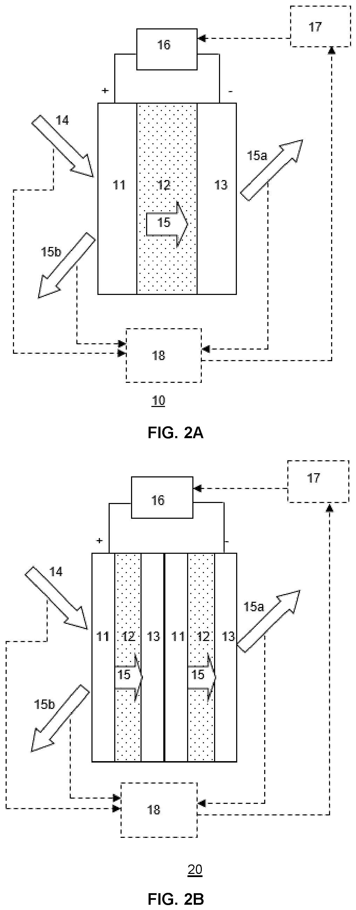

A schematic representation of an exemplary electrolysis cell constructed for electrolyzing different types of reactant materials into desired reaction products is shown in FIG. 2a. The cell *10* comprises a first electrode *11* and a second electrode *13*, as well as an electrolyte *12* provided between the first electrode *11* and the second electrode *13*. During electrolysis operation, electrical power is supplied to the cell *10* (i.e. across the first electrode *11* and the second electrode *13*) through a power electronic unit *16* and a reactant *14* passed over the first electrode *11* is separated into ions *15* of a second reaction product *15a* and a mixture *15b* of a first reaction product and unreacted reactant. The ions *15* pass though the electrolyte *12* and the second reaction product *15a* is formed at the second electrode *13*. According to the present invention, the power electronic unit *16* provides one or more voltage fluctuations to the electrolysis cell(s). In a preferred embodiment, the system according to the present invention further comprises at least one proportional-integral-derivative (PID) system *17* controlling the voltage fluctuation(s) based on measurements of the inlet and outlet temperature of the fluid (gas or liquid) sent to and from the electrolysis cell(s) or the stack or by measurements of the temperature directly in the cell compartments (not shown), wherein each of the temperature measurements may be conducted by a temperature detection means *18*. The PID controller is configured to continuously calculate an error value as the difference between a desired temperature setpoint and the measured temperatures, enabling the connected power electronic unit to apply a correction of the voltage fluctuations based on proportional, integral, and derivative terms.

The reactant materials are not particularly limited. In preferred embodiments, the one or more electrolysis cell(s) perform electrolysis of $H_2O$, $CO_2$, or co-electrolysis of $H_2O$ and $CO_2$.

If the cell *10* is a solid oxide electrolysis cell (SOEC) designed to electrolyze water, the first electrode *11* represents the hydrogen electrode, the second electrode *13* may be referred to as the oxygen electrode, and the reactant *14* will be high temperature steam. A catalyst in the hydrogen electrode facilitates separation of steam *14* into oxygen ions *15* and a mixture of hydrogen gas and unreacted steam *15b*. As the oxygen ions *15* pass though the electrolyte *10*, oxygen gas *15a* will be formed at a catalyst in the oxygen electrode *13*. However, it is understood that FIG. 2a serves to schematically illustrate an exemplary electrolysis system, and the present invention is not limited to such a configuration (or a SOEC) and may include further layers (e.g. membranes or diaphragms) and components as long as the electrolysis cell enables electrolytic operation. In embodiments, the electrolytic cell may be constructed from fuel cells which operate in electrolytic mode (reversible fuel cells). Furthermore, the electrolysis cell is not limited to a flat stack configuration but may also incorporate other designs (including cylindrical configurations, for example). FIG. 2b illustrates an electrolysis stack *20* that is constructed from two electrolysis cells *10*. Depending on electrolysis production requirements, additional cells could also be added to the stack *20*.

Unless otherwise noted, the term "electrolysis cell(s)", as used herein, will be understood to encompass both a single cell, such as the cell *10* shown in FIG. 2a, and a stack of two or more cells, such as the stack *20* shown in FIG. 2b.

It is noted that details pertaining to materials and construction techniques for electrolysis cells are well-known to the skilled artisan and will not be described herein.

In general, a distinction may be made between low-temperature and high-temperature electrolysis. In high-temperature electrolysis, the one or more electrolysis cell(s) are configured to operate above 120°C, such as 200°C to 1100°C, or 650°C to 1000°C, for example. While not being limited thereto, the one or more electrolysis cell(s) for high-temperature electrolysis are preferably selected from solid oxide electrolysis/fuel cells (SOEC/SOFC), molten carbonate electrolysis/fuel cells (MCEC/MCFC), high temperature and pressure alkaline electrolysis/fuel cells, and ceramic electrolyte proton conducting electrolysis/fuel cells (PCEC/PCFC).

From the above description, it will be understood that the systems and methods of the present invention may also be used to extend the lifetime of fuel cells and fuel cell stacks, i.e., cells with operate in fuel cell mode exclusively (not claimed).

In electrolytic mode, the electrolysis reaction is generally endothermic, i.e. the reaction heat is negative. The Joule heat due to the necessary overpotential and current is positive in both fuel cell and electrolysis mode. In high-temperature electrolysis, near-thermoneutral operation at an operating voltage below $E_{tn}$ is desirable for optimal performance. For operating voltages between OCV and $E_{tn}$, near-thermoneutral operation requires heat addition during the electrolysis process. In such a system, heat addition is further necessary to reduce tensile stress at the interconnect/cell interface, which potentially leads to delamination and loss of contact, poor performance and degradation. Conventionally, heat is supplied through the use of a heated sweep gas or active heating devices, for example. In contrast, in the present invention, the Joule heat is balanced with the reaction heat (plus heat loss to surroundings) by supplying the electrolysis cell(s) with one or more voltage fluctuations via one or more power electronic unit(s). Thus, the electrolysis system can be operated near-thermoneutrally with no need for external heating sources.

By adjusting the voltage variation the Joule heat can be set to balance or slightly exceed the reaction heat. This enables near-thermoneutral operation, or slightly exothermal operation with an average (integral) SRU voltage between OCV and $E_{tn}$ while having the temperature of the outlet gas to be the same or slightly higher than the temperature of the inlet gas. Therefore the operation with the voltage variation enables improved control of the thermal profile in the SRU. Optimizing the average (integral) SRU voltage and the thermal profile can be used to increase the carbon activity in a carbonaceous gas inside the electrolysis stack without risking detrimental carbon formation in the electrodes. For

$CO_2$ electrolysis this translates into higher outlet gas CO concentration which again translates into decreased expenses for gas separation.

The term "voltage fluctuation", as used herein, denotes a predetermined variation of the cell voltage, which may be applied in the form of a periodical voltage variation which recurs in predefined intervals. By operating the electrolysis system accordingly, the duration of each fluctuation is so short that the temperature change in the fluid (e.g. gas) and the cells and stack is negligible. In this way, accumulation of mechanical tension at the weak interfaces in the stack can be avoided, making it possible to achieve the increased lifetimes enabled by reversible operation. According to the present invention, the frequency of the voltage fluctuation(s) is in the range of from 10 mHz to 100 kHz.

In preferred embodiments, the range of the voltage fluctuation(s) is between 0.2 V and 2.0 V, especially preferably between 0.5 V and 1.9 V.

In a preferred embodiment of the present invention, the power electronic unit comprises a DC power supply with a pulse width modulation (PWM) motor controller, a bi-directional power supply, or a power supply combined with an electronic load (e-load).

In a preferred embodiment, the voltage fluctuation(s) is/are configured to effect volatilization, desorption or dissolution of side reaction compounds adsorbed, precipitated or otherwise formed in the electrodes of the cell(s), e.g. by increasing the oxidation state (oxidation) or decreasing the oxidation state (reduction) of said side reaction compounds, which leads to degradation decrease, more stable cell voltage and extended lifetime of the cells. While not being limited thereto as long as their formation is reversible, such side reaction compounds may be undesired intermediates or originate from impurities in the reactant (e.g., hydroxides formed by alkaline earth metals, hydrocarbons, sulphur-based compounds, formaldehyde, formic acid ammonia, halogenated compounds) or from electrolysis cell materials (e.g., Si-based impurities from glass components). Desorption or dissolution of side reaction compounds may be achieved by periodical changes to the cell voltage so that the electrochemical cell switches between electrolysis and fuel cell mode operation, for example.

Ni-migration is known to be one of the main degradation mechanisms in Ni/YSZ-electrodes used for conventional DC electrolysis, observed both in $H_2O$ and $CO_2$ electrolysis. Impurities such as sulphur strongly bind to the Ni-surface, which is known to accelerate Ni-particle coarsening. Hence, desorption of sulphur (and other) impurities may impede Ni-migration.

Without being bound to theory, it is assumed that the reduction in the degradation rate may to a certain extent related to desorption of impurities adsorbed at the electrochemically active sites during cathodic polarization of Ni/YSZ electrodes. As an example thereof, the formation of SiOz at the active sites during cathodic polarization of the Ni/YSZ electrode may be mentioned. This is expected to occur via the reaction $Si(OH)_4(g) \rightarrow H_2O(g) + SiO_2(l)$ as described earlier by A. Hauch et al., J Electrochem Soc. 2007;154(7):A619-A26. During a short anodic polarization, $H_2O$ may be formed and SiOz may be desorbed. The shape of the voltage fluctuation can be in principle of any type. However, voltage fluctuations comprising sine-wave shaped and/or square-wave shaped voltage fluctuation profiles are preferable. A mix between the sine-shaped and the square-shaped voltage fluctuations is especially preferred to minimize the peak voltage and to minimize erroneous operation conditions related to induction phenomena. Calculations of near-thermoneutral operation conditions using sine-wave shaped and/or square-wave shaped voltage fluctuation profiles will be described by means of examples below.

In a second embodiment, the present invention relates to a method for operating one or more electrolysis cell(s), comprising: providing one or more voltage fluctuations to the electrolysis cell(s) by at least one power electronic unit, wherein the voltage fluctuation(s) are configured such that near-thermoneutral operation at part load is enabled by matching the integral Joule heat production with the integral reaction heat consumption inside said cell(s), wherein the voltage fluctuations are periodical changes of cell voltage with a frequency in the range of from 10 mHz to 100 kHz.

In a preferred embodiment, the current in the cell(s) is reversed for a fraction of the time of the voltage fluctuation, so that the cell(s) operate in fuel cell mode. Advantageously, this process may reduce damages to the electrode microstructure and/or effect desorption or dissolution of side reaction compounds adsorbed, precipitated or otherwise formed in the electrodes of the cell(s). Furthermore, during the fraction of time where the current is reversed, not all the products from the integral electrochemical reaction which still reside inside the cell(s) are converted back to reactants. Therefore there is no need to change the fluid (e.g. gas) composition, as opposed to conventional (DC voltage) operation.

In solid oxide fuel cells, Cr poisoning is known to limit the SOFC air -electrode lifetime, so that alumina coated steel pipes are typically required for air supply. Cr posoning is expected to proceed by reaction of gaseous CrOz(OH)z with solid strontium oxide (SrO) present at the reaction sites in strontium-rich air electrodes, resulting in the formation of $SrCrO_4$ and $H_2O$. By applying voltage fluctuations according to the present invention during fuel cell operation, desorption of SrCrOt can be effected.

It will be understood that the preferred features of the first embodiment may be freely combined with the second embodiment in any combination, except for combinations where at least some of the features are mutually exclusive.

**EXAMPLES**

Example 1: Sine-wave shaped voltage fluctuations

In general, the voltage fluctuation provided to the electrolytic cell(s) can be regarded as a DC voltage superimposed by a smaller AC voltage (AC/DC voltage).

A DC voltage $U_1$ superimposed with an AC sine voltage can be written as

$$U(t) = U_0 \sin(\omega t) + U_1 \qquad \text{(Eq. 1)}$$

The reaction heat can be written as

$$\dot{Q}_r = \frac{U - E}{R} K \qquad \text{(Eq. 2)}$$

Herein, $U$ represents the cell voltage, $E$ is the Nernst voltage, $R$ the cell resistance, and $K$ is the Coulomb specific reaction heat ( $K = \dfrac{T\Delta S}{nF}$ ). For electrolysis, the reaction heat is negative.

The Joule heat can be written as:

$$\dot{Q}_J = \left( \frac{U - E}{R} \right)^2 \qquad \text{(Eq. 3)}$$

For thermo-neutral operation, it is required that:

$$\Downarrow \quad \int_0^T \dot{Q}_r + \dot{Q}_J \; dt = 0$$

$$\Updownarrow \quad \int_0^T (\frac{U_0\sin(\omega t) + U_1 - E}{R}) \cdot K + \frac{(U_0\sin(\omega t) + U_1 - E)^2}{R} \; dt = 0$$

$$\Updownarrow \quad \int_0^T (U_0\sin(\omega t) + U_1 - E) \cdot K + U_0^2 \sin^2(\omega t) + (U_1 - E)^2 + 2(U_1 - E)U_0 \sin(\omega t) \; dt = 0 \qquad \text{(Eq.}$$

$$\Updownarrow \quad \left[ -\frac{U_0 K}{\omega}\cos(\omega t) + (U_1 - E)Kt + U_0^2\left(\frac{t}{2} - \frac{1}{4}\sin(2\omega t)\right) + (U_1 - E)^2 t - 2\frac{(U_1 - E)}{\omega}\cos(\omega t) \right]_0^T = 0$$

$$\Updownarrow \quad (U_1 - E)KT + \frac{U_0^2}{2}T + (U_1 - E)^2 T = 0$$

$$\Updownarrow \quad (U_1 - E) = \frac{-K \pm \sqrt{K^2 - 2U_0^2}}{2}$$

4)

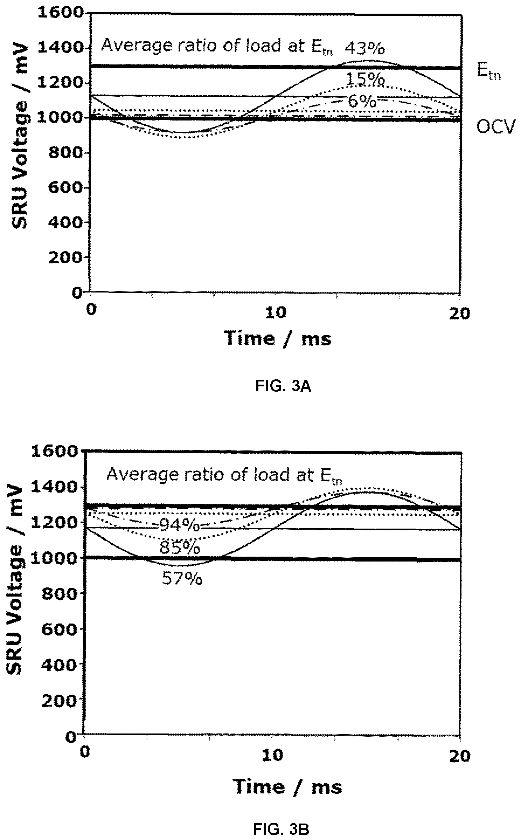

Figures 3A and 3B illustrate exemplary sine-shaped fluctuations operated at 50 Hz. The graphs in Figure 3A refer to the + sign, and the in Figure 3B graphs refer to the - sign in the last line of Equation 4. Corresponding average voltages are shown as horizontal lines.

Example 2: Square-wave shaped voltage fluctuations

If square-shaped voltage variations are used, the following expression applies for near-thermoneutral operation:

$$\Downarrow \quad T_1(\dot{Q}_{r,1} + \dot{Q}_{J,1}) + T_2(\dot{Q}_{r,2} + \dot{Q}_{J,2}) = 0$$

$$\Updownarrow \quad T_1\left(\frac{(U_1 - E)}{R}K + \frac{(U_1 - E)^2}{R}\right) + T_2\left(\frac{(U_2 - E)}{R}K + \frac{(U_2 - E)^2}{R}\right) = 0$$

$$\Updownarrow \quad T_1 K \Delta U_1 + T_1 \Delta U_1^2 + T_2 K \Delta U_2 + T_2 \Delta U_2^2 = 0 \qquad \text{(Eq. 5)}$$

$$\Updownarrow \quad t_1 K \Delta U_1 + t_1 \Delta U_1^2 + (1 - t_1) K \Delta U_2 + (1 - t_1) \Delta U_2^2 = 0$$

$$\Updownarrow \quad \Updownarrow \quad \Delta U_2 = \frac{-K(1 - t_1) \pm \sqrt{(K(1 - t_1))^2 - 4(1 - t_1)(\Delta U_1^2 + K \Delta U_1)t_1}}{2(1 - t_1)}$$

Herein, $\Delta U_1 = (U_1 - E)$ and $\Delta U_2 = (U_2 - E)$. In Equation 5, it is assumed that the voltages only switch between $U_1$ and $U_2$ such that the total period $T = T_1 + T_2$.

The average voltage $U_{av}$ is given as:

$$U_{av} = T_1 \cdot U_1 + T_2 \cdot U_2 \quad (1)$$

Assuming $E$ = 1V and $K$ = -0.3V for steam electrolysis and $K$ = -0.5 for $CO_2$ electrolysis, a first approximation for the relation between $U_1$ and $U_0$ can be obtained from Equation 4 for the sine function. Using the same assumptions for $E$ and $K$, a relation from Equation 5 between $U_1$, $U_2$ and $T_1$ for the square shaped voltage variation is obtained.

The voltage variation can be any shape. The sine-wave shape and square-wave shape are provided for mathematical simplicity. The important aspect is the integrated Joule heat balances the integrated reaction heat. Smooth curves are preferred over square-wave shaped curves to minimize stray-inductance and eddy currents in the SRU.

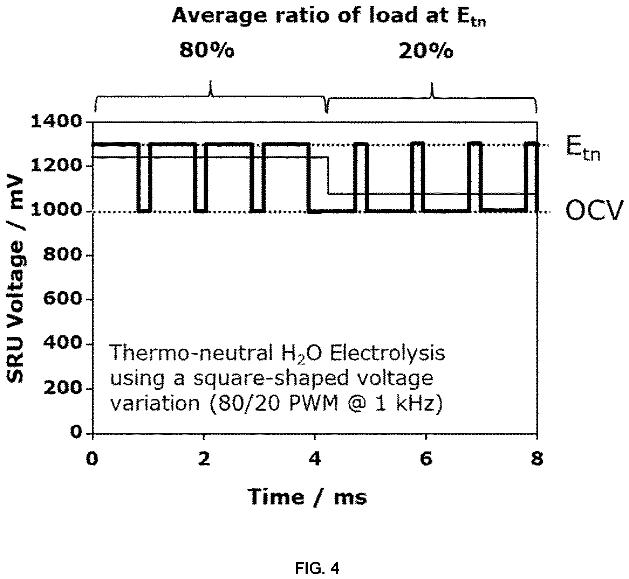

FIG. 4 shows an example with a square-shaped voltage fluctuation for steam ($H_2O$) electrolysis. Herein, the voltage fluctuates between OCV and $E_{tn}$. At these voltages, the cell is operated near-thermoneutrally.

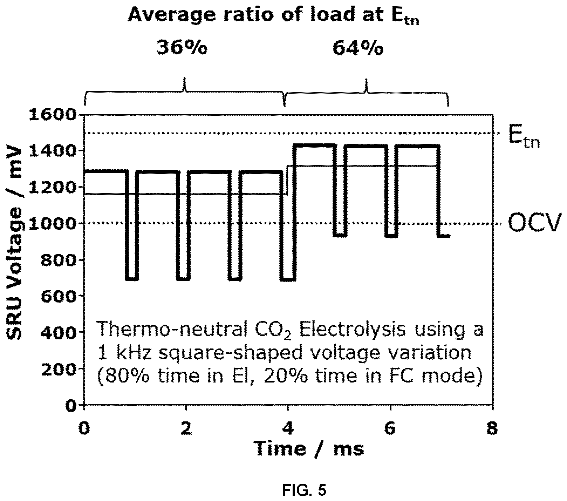

FIG. 5 shows an example with a square-shaped voltage fluctuation during thermo-neutral $CO_2$ electrolysis. Herein, the square-wave shaped cell voltage fluctuation causes a switch between electrolysis mode and fuel cell mode when applying a cell voltage below OCV, which promotes desorption or dissolution of side reaction compounds formed in the cell electrodes. Moreover, the heat generated during the operation in fuel cell mode (i.e. the 20% of the time where the cell voltage is below OCV) balances the heat consumed during the operation in electrolysis mode (i.e. the 80% of the time where the cell voltage is above OCV). The average cell voltages are 1.18 V and 1.32 V (thin line), respectively. The two examples shown in FIG. 4 and 5 are both operated at 1 kHz.

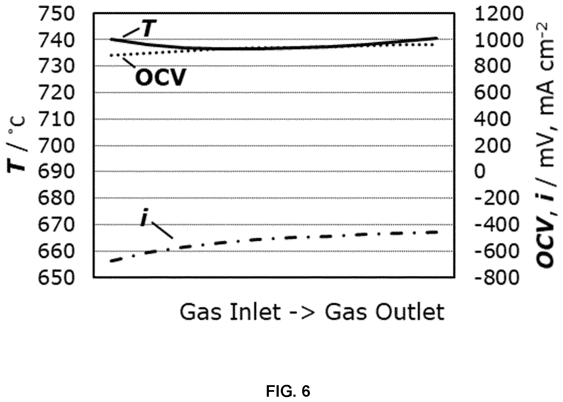

In a further experiment shown in FIG. 6, OCV/temperature/current density profiles were calculated in line with FIG. 1 (i.e. using a cell footprint of 100 $cm^2$, 5% CO at gas inlet and 27.8 % CO at gas outlet, $CO_2$ as buffer gas, 5x oxygen overblow) with the exception that voltage fluctuations according to FIG. 4 were applied (1.3 V for 74% of the fluctuation period and 0.7 V for 26% of the fluctuation period; Integral current = 53 A). FIG. 6 demonstrates that, in contrast to conventional electrolysis operation (cf. FIG. 1), a flat temperature profile is achieved inside the stack and current density changes between gas inlet and gas outlet are kept at a minimum.

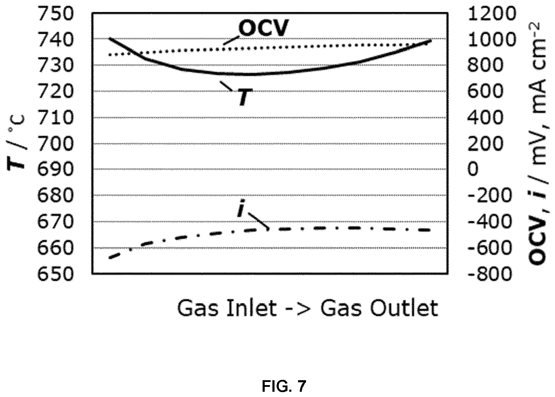

FIG. 7 shows the OCV, temperature and current density under the conditions of FIG. 6, except for the omission of oxygen overblow. In comparison to FIG. 6, a larger temperature variation is observed. However, the current density can be maintained on a similarly stable level.

It is shown that the present invention enables near-thermoneutral operation of electrolysis cells and stacks by controlling the size and shape of voltage fluctuations. By reducing thermo-mechanical stress in the stack, the lifetime of electrolysis cells and stacks may be further improved.

Accordingly, it is possible to provide a low-cost electrolysis system which simultaneously enables fast-response dynamic operation, improved electrolysis efficiency, increased lifetime and high impurity tolerance and improved conditions for CO production.

Example 3: $H_2/H_2O$ Electrolysis Tests

An electrolysis system for $H_2/H_2O$ electrolysis was set up as follows: An asymmetric square-shaped wave function was set at a function generator (Wavetek Model 145). The thus produced signal was amplified by a bipolar power supply (Kepco BOP 20-20D) and transferred to a test setup in accordance to C. Graves et al., Nature Materials 2015, 14, 239-244. An oscilloscope (Philips PM 3384) was used to monitor the cell voltage as well as the signal from the function generator. In AC/DC mode, the electrolysis cell was operated at 30 Hz fluctuating between 1.27 V (-90% of the time) and 0.8 V (-10% of the time), i.e. 90% duty, giving an average voltage of 1.22 V. For the sake of comparison, the electrolysis cell was also operated in DC mode, with the operating conditions for the $H_2O$ electrolysis tests being shown in Table 1 below. For both electrolysis tests, the gas flow to the negative electrode was 24 l/h of $H_2$:$H_2O$ (with a ratio of 0.5:0.5), and the inlet temperature was 700 °C.

TABLE 1

| Electrolysis mode | Fuel side flow rate [$l \cdot h^{-1}$] | Inlet $H_2O$:$H_2$ ratio | Air flow rate [$l \cdot h^{-1}$] | Average Cell Current Density [$A \cdot cm^{-2}$] | Average Cell Voltage [V] |
|---|---|---|---|---|---|
| DC $H_2O$ | 24 | 0.5 : 0.5 | 140 | ~ - 0.73 | 1.27 |
| AC/DC $H_2O$ | 24 | 0.5 : 0.5 | 140 | ~ - 0.55 | 1.22 |

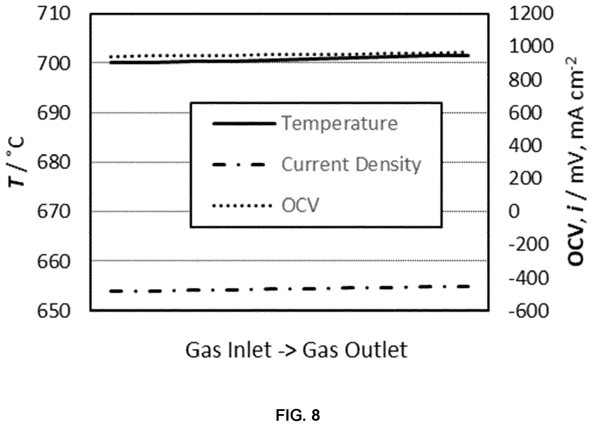

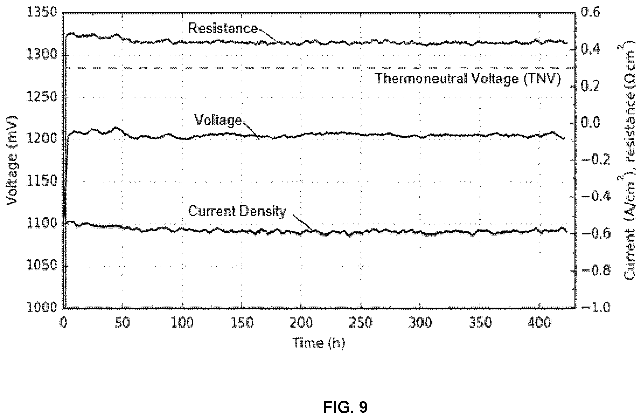

For the AC/DC test, with the current density being approximately -0.55 A/cm², the $H_2O$ utilization was 30% and the air overblow factor was 16. The Nernst voltage vs. air was calculated to be 941 mV and 965 mV at the inlet and outlet, respectively. The calculated outlet temperature and gas composition was 701°C, and 65% $H_2$ + 35% $H_2O$. The profiles for temperature, Nernst voltage and current density from inlet to outlet are presented in FIG. 8 (for a co-flow configuration). FIG. 9 shows the cell area specific resistance, current and voltage as function of time during AC/DC $H_2O$ electrolysis.

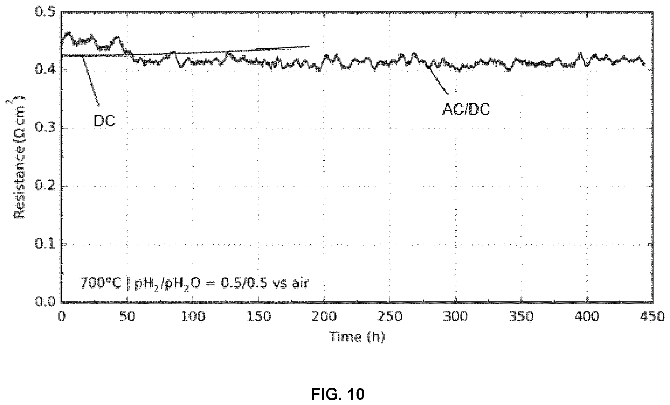

The evolution of the cell area specific resistance for the AC/DC and DC $H_2O$ electrolysis are compared in FIG. 10, which shows that the application of voltage fluctuations according to the present invention effectively prevents the increase of cell resistance during cell operation. It is noted that the measured area specific resistance for the AC/DC test is initially higher than for the DC test. Impedance spectra recorded before and after the AC/DC test indicated that this effect was based on a higher positive electrode resistance when compared to the positive electrode resistance the resistance of the reference cell.

Example 4: CO/CO$_2$ Electrolysis Tests

Three cells were tested in CO:CO$_2$ electrolysis mode, using the test setup described in Example 3.

All tested cells were multi-layer tapecasted cells (MTC) cells, having a CGO (cerium gadolinium oxide) barrier layer, an LSC (lanthanum strontium cobaltite)-CGO oxygen electrode and an LSC contact layer.

The cells were tested under the following conditions:

1) DC test without gas cleaning: total flow of 18 L/h with inlet CO:CO$_2$ ratio of 0.13:0.87; average cell current density of 0.31 A/cm², inlet temperature of ~ 695 °C, 13.3% fuel utilization (outlet CO:CO$_2$ ratio 0.24 : 0.76), a total fuel flow rate of 18 L/h, and an air flow rate of 50 L/h to the oxygen electrode.

2) DC test with gas cleaning: inlet flow of 10.5 L/h with re-circulation of the outlet gas, incl. 20% CO, a total fuel flow rate of 21 L/h and an inlet CO:CO$_2$ ratio of 0.1:0.9, average cell current density of 0.31 A/cm², inlet temperature of ~695 °C, 11% fuel utilization (outlet CO:CO$_2$ ratio 0.20:0.80), and an air flow rate of 50 L/h to the oxygen electrode.

3) AC/DC test: total flow of 16 L/h with CO:CO$_2$ ratio of 0.11:0.89, average cell current density of -0.3 A/cm², inlet temperature of ~695 °C, -14.7% fuel utilization (outlet CO:CO$_2$ ratio ~0.24:0.76), a total fuel flow rate of 16 L/h and an air flow rate of 140 L/h to the oxygen electrode. The gas cleaner was switched off after 250 h testing. The cell was operated at 30 Hz fluctuating between 1.30 V (-60% time) and 0.75 V (-40% time), i.e. a 60% duty giving an average voltage of 1.09 V.

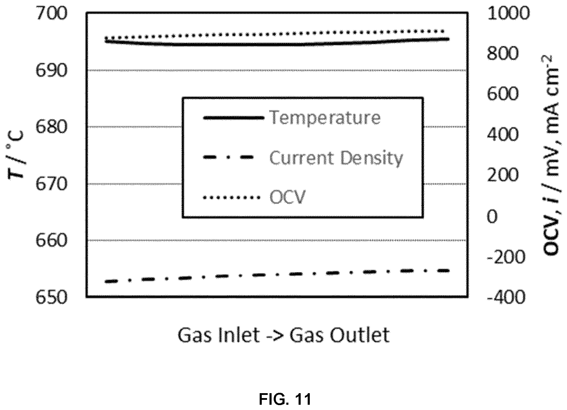

The calculated temperature, current density and Nernst voltage profile for the AC/DC test from fuel and air inlet to outlet is shown in FIG. 11. A counter-flow test setup was used for the actual cell test whereas a co-flow configuration was used for the presented calculation, however, the temperature profile is relatively flat in both cases. The Nernst voltage (OCV) at the inlet and outlet was 877 mV and 913 mV, respectively. A slight temperature increase from 695 °C to 696 °C is measured from inlet to outlet.

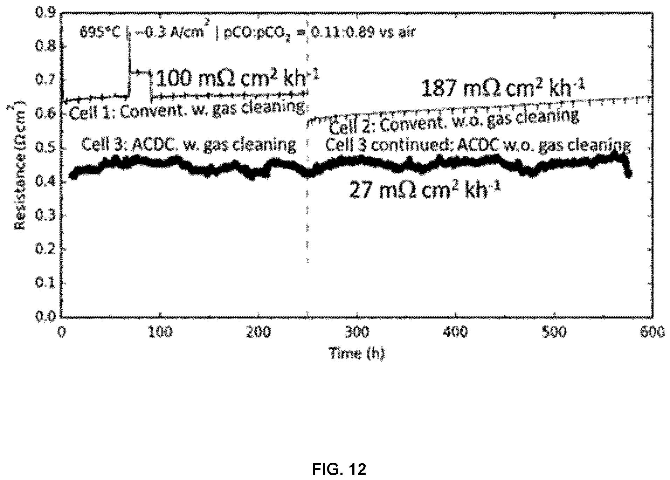

A comparison of the cell area specific resistance profiles for the two DC tests and the AC/DC test, respectively, is presented in FIG. 12. The degradation rates shown in FIG. 12, which have been calculated as the time-dependent change in area specific resistance (in $m\Omega \cdot cm^2 \cdot kh^{-1}$), demonstrate that in the case of operating with cleaned gases, the AC/DC operation reduces the degradation rate by a factor of approximately 3.7, compared to conventional DC operation. The results indicate that increase of area specific cell resistance during cell operation may also be effectively supressed in CO:CO$_2$ electrolysis cells, which enables an increased cell lifetime, higher efficiency and stable cell operation.

**REFERENCE NUMERALS**

10: electrolysis cell
11: first electrode
12: electrolyte
13: second electrode
14: reactant
15: ions
15a: second reaction product
15b: mixture of first reaction product and unreacted reactant
16: power electronic unit
17: optional PID system
18: temperature detection means
10: electrolysis cell stack

**Claims**

1. A system for operating one or more electrolysis cell(s), comprising:

   one or more electrolysis cell(s); and
   at least one power electronic unit, wherein the power electronic unit(s) is(are) configured to provide voltage fluctuations to the electrolysis cell(s),
   wherein the voltage fluctuations are configured such that near-thermoneutral operation at part load is enabled by matching the integral Joule heat production with the integral reaction heat consumption inside said cell(s), the near-thermoneutral operation denoting an electrothermal balanced operation, which uses electric (Joule) heat to balance the required reaction heat;
   wherein the voltage fluctuations are periodical changes of cell voltage with a frequency in the range of from 10 mHz to 100 kHz.

2. The system according to claim 1, wherein the one or more electrolysis cell(s) is a (are) reversible fuel cell(s).

3. The system according to claim 1 or 2, wherein the one or more electrolysis cell(s) is (are) configured to operate above 120°C.

4. The system according to any of claims 1 to 3, wherein the one or more electrolysis cell(s) is(are) selected from solid oxide electrolysis/fuel cells (SOEC/SOFC), molten carbonate electrolysis/fuel cells (MCEC/MCFC), high temperature and pressure alkaline electrolysis/fuel cells, and ceramic electrolyte proton conducting electrolysis/fuel cells (PCEC/PCFC).

5. The system according to any of claims 1 to 4, further comprising at least one proportional integral-derivative system controlling the voltage fluctuation(s) based on measurements of the inlet and outlet temperature of fluids sent to and from the stack.

6. The system according to any of claims 1 to 5, wherein the power electronic unit comprises a DC power supply with a pulse width modulation (PWM) motor controller, a bi-directional power supply, or a power supply in combination with an e-load.

7. The system according to any of claims 1 to 6, wherein the range of the voltage fluctuation(s) is between 0.2 V and 2.0 V.

8. The system according to claim 7, wherein the range of the voltage fluctuation(s) is between 0.5 V and 1.9 V.

9. The system according to any of claims 1 to 8, wherein the one or more electrolysis cell(s) perform(s) electrolysis of $H_2O$ and/or $CO_2$.

10. A method for operating one or more electrolysis cell(s), comprising:

providing voltage fluctuations to the electrolysis cell(s) by at least one power electronic unit,
wherein the voltage fluctuations are configured such that near-thermoneutral operation at part load is enabled by matching the integral Joule heat production with the integral reaction heat consumption inside said cell(s), the near-thermoneutral operation denoting an electrothermal balanced operation, which uses electric (Joule) heat to balance the required reaction heat;
wherein the voltage fluctuations are periodical changes of cell voltage with a frequency in the range of from 10 mHz to 100 kHz.

**11.** The method according to claim 10, wherein for a fraction of the time of the voltage fluctuation, the current in the cell(s) is reversed such that the cell(s) operate(s) in fuel cell mode.

**12.** The method according to any of claims 10 or 11, wherein the one or more electrolysis cell(s) perform(s) electrolysis of at least $CO_2$.

**Patentansprüche**

**1.** System zum Betreiben einer oder mehrerer Elektrolysezelle(n), umfassend:

eine oder mehrere Elektrolysezelle(n); und
mindestens eine leistungselektronische Einheit, wobei die leistungselektronische Einheit(en) konfiguriert ist/sind, um Spannungsschwankungen an die Elektrolysezelle(n) bereitzustellen,
wobei die Spannungsschwankungen derart konfiguriert sind, dass ein nahezu thermoneutraler Betrieb bei Teillast durch Anpassen der integralen Jouleschen Wärmeerzeugung an den integralen Reaktionswärmeverbrauch innerhalb der Zelle(n) ermöglicht wird, wobei der nahezu thermoneutrale Betrieb einen elektrothermisch ausgeglichenen Betrieb kennzeichnet, der elektrische (Joulsche) Wärme verwendet, um die erforderliche Reaktionswärme auszugleichen;
wobei die Spannungsschwankungen periodische Änderungen der Zellenspannung mit einer Frequenz im Bereich von 10 mHz bis 100 kHz sind.

**2.** System nach Anspruch 1, wobei die eine oder mehreren Elektrolysezelle(n) eine oder mehrere reversible Brennstoffzelle(n) ist (sind).

**3.** System nach Anspruch 1 oder 2, wobei die eine oder mehreren Elektrolysezelle(n) für eine Arbeitstemperatur von über 120°C konfiguriert ist (sind).

**4.** System nach einem der Ansprüche 1 bis 3, wobei die eine oder mehreren Elektrolysezelle(n) aus Festoxid-Elektrolyse-/Brennstoffzellen (SOEC/SOFC), Schmelzkarbonat-Elektrolysezellen/Brennstoffzellen (MCEC/MCFC), alkalische Hochtemperatur- und Hochdruck- Elektrolysezellen/Brennstoffzellen und protonenleitende Elektrolysezellen/Brennstoffzellen mit Keramikelektrolyten (PCEC/PCFC) ausgewählt ist (sind).

**5.** System nach einem der Ansprüche 1 bis 4, welches ferner mindestens ein Proportional-Integral-Differential-System umfasst, das die Spannungsschwankung(en) basierend auf Messungen der Einlass- und Auslasstemperatur von Fluiden steuert, die zu und von dem Stapel geleitet werden.

**6.** System nach einem der Ansprüche 1 bis 5, wobei die leistungselektronische Einheit eine DC-Leistungsversorgung mit einer Pulsweitenmodulations(PWM)-Motorsteuerung, eine bidirektionale Leistungsversorgung oder eine Leistungsversorgung in Kombination mit einer elektronischen Last umfasst.

**7.** System nach einem der Ansprüche 1 bis 6, wobei der Bereich der Spannungsschwankung(en) zwischen 0,2 V und 2,0 V liegt.

**8.** System nach Anspruch 7, wobei der Bereich der Spannungsschwankung(en) zwischen 0,5 V und 1,9 V liegt.

**9.** System nach einem der Ansprüche 1 bis 8, wobei die eine oder mehreren Elektrolysezelle(n) eine Elektrolyse von $H_2O$ und/oder $CO_2$ durchführt (durchführen).

**10.** Verfahren zum Betreiben einer oder mehrerer Elektrolysezelle(n), umfassend:

Bereitstellen von Spannungsschwankungen für die Elektrolysezelle(n) durch mindestens eine leistungselektronische Einheit,

wobei die Spannungsschwankungen derart konfiguriert sind, dass ein nahezu thermoneutraler Betrieb bei Teillast durch Anpassen der integralen Jouleschen Wärmeerzeugung an den integralen Reaktionswärmeverbrauch innerhalb der Zelle(n) ermöglicht wird, wobei der nahezu thermoneutrale Betrieb einen elektrothermisch ausgeglichenen Betrieb kennzeichnet, der elektrische (Joulsche) Wärme verwendet, um die erforderliche Reaktionswärme auszugleichen;

wobei die Spannungsschwankungen periodische Änderungen der Zellenspannung mit einer Frequenz im Bereich von 10 mHz bis 100 kHz sind.

11. Verfahren nach Anspruch 10, wobei für einen Bruchteil der Zeit der Spannungsschwankung der Strom in der/den Zelle(n) umgepolt wird, so dass die Zelle(n) im Brennstoffzellenmodus arbeitet (arbeiten).

12. Verfahren nach einem der Ansprüche 10 oder 11, wobei die eine oder mehreren Elektrolysezelle(n) eine Elektrolyse von mindestens $CO_2$ durchführt (durchführen).

**Revendications**

1. Système de fonctionnement d'une ou plusieurs cellules électrolytiques, comprenant :

une ou plusieurs cellules électrolytiques ; et
au moins un module électronique de puissance, le ou les modules électroniques de puissance étant configuré(s) pour fournir des fluctuations de tension à la (aux) cellule(s) électrolytique(s),
les fluctuations de tension étant configurées de de sorte que l'on permet un fonctionnement presque thermiquement neutre à charge partielle en faisant correspondre la production intégrale de chaleur par effet Joule avec la consommation intégrale de chaleur de réaction à l'intérieur de ladite (desdites) cellule(s), le fonctionnement presque thermiquement neutre dénotant un fonctionnement électrothermique équilibré, qui utilise de la chaleur électrique (effet Joule) pour équilibrer la chaleur de réaction requise ;
les fluctuations de tension étant des changements périodiques de la tension de cellule avec une fréquence variant de 10 mHz à 100 kHz.

2. Système selon la revendication 1, la ou les cellules électrolytiques étant une (des) pile(s) à combustible réversible(s).

3. Système selon la revendication 1 ou 2, la ou les cellules électrolytiques étant configurée(s) pour fonctionner au-dessus de 120 °C.

4. Système selon l'une quelconque des revendications 1 à 3, la ou les cellules électrolytiques étant choisie(s) parmi des cellules électrolytiques/piles à combustible à oxyde solide (SOEC/SOFC), des cellules électrolytiques/piles à combustible au carbonate fondu (MCEC/MCFC), des cellules électrolytiques/piles à combustible alcalines à haute température et pression et des cellules électrolytiques/piles à combustible à conduction de protons et électrolyte céramique (PCEC/PCFC).

5. Système selon l'une quelconque des revendications 1 à 4, comprenant en outre au moins un système à proportionnelle-intégrale-dérivée régulant la ou les fluctuations de tension sur la base de mesures de la température d'entrée et de sortie de fluides envoyés vers et depuis l'empilement.

6. Système selon l'une quelconque des revendications 1 à 5, dans lequel l'unité électronique de puissance comprend une alimentation électrique CC équipée d'un contrôleur de moteur à modulation de largeur d'impulsion (PWM), une alimentation électrique bidirectionnelle, ou une alimentation électronique associée à une charge électronique.

7. Système selon l'une quelconque des revendications 1 à 6, dans lequel la gamme de la (des) fluctuation(s) de tension est entre 0,2 V et 2,0 V.

8. Système selon la revendication 7, dans lequel la gamme de la (des) fluctuation(s) de tension est entre 0,5 V et 1,9 V.

9. Système selon l'une quelconque des revendications 1 à 7, dans lequel la ou les cellules électrolytiques réalisent l'électrolyse de $H_2O$ et/ou $CO_2$.

**10.** Procédé de fonctionnement d'une ou plusieurs cellules électrolytiques, comprenant :

la fourniture de fluctuations de tension à la (aux) cellule(s) électrolytique(s) par au moins un module électronique de puissance,

les fluctuations de tension étant configurées de de sorte que l'on permet un fonctionnement presque thermiquement neutre à charge partielle en faisant correspondre la production intégrale de chaleur par effet Joule avec la consommation intégrale de chaleur de réaction à l'intérieur de ladite (desdites) cellule(s), le fonctionnement presque thermiquement neutre dénotant un fonctionnement électrothermique équilibré, qui utilise de la chaleur électrique (effet Joule) pour équilibrer la chaleur de réaction requise ;

les fluctuations de tension étant des changements périodiques de la tension de cellule avec une fréquence variant de 10 mHz à 100 kHz.

**11.** Procédé selon la revendication 10, dans lequel pendant une fraction de la durée de la fluctuation de tension, le courant dans la (les) cellule(s) est inversé de sorte que la (les) cellule(s) fonctionne(nt) en mode pile à combustible.

**12.** Procédé selon l'une quelconque des revendications 10 ou 11, dans lequel la ou les cellules électrolytiques réalisent l'électrolyse du $CO_2$ au moins.

FIG. 1

**FIG. 2A**

**FIG. 2B**

FIG. 3A

FIG. 3B

FIG. 4

FIG. 5

FIG. 6

FIG. 7

FIG. 8

FIG. 9

FIG. 10

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090325014 A1
- WO 2018033948 A1
- US 2009263681 A1
- US 20160040310 A1

**Non-patent literature cited in the description**

- **C. GRAVES et al.** *Nature Materials,* 2015, vol. 14, 239-244
- **A. DHAFER.** *International Journal of Innovative Research in Science, Engineering and Technology,* 2015, vol. 4 (12), 12239-12250
- **A. HAUCH et al.** *J Electrochem Soc.,* 2007, vol. 154 (7), A619-A26